# EUROPÄISCHE PATENTSCHRIFT

(11) **EP 2 921 366 B1**
(45) Veröffentlichungstag und Bekanntmachung des Hinweises auf die Patenterteilung: **16.08.2023**
(21) Anmeldenummer: 15152786.8
(22) Anmeldetag: 28.01.2015
(51) Int. Cl.: B60L 58/12, B60W 50/00, B60W 50/08, G01C 21/26, B60W 10/30, B60W 50/14

(54) **ENERGIEMANAGEMENTVERFAHREN FÜR EIN FAHRZEUG UND ENERGIEMANAGEMENTVORRICHTUNG**
ENERGY MANAGEMENT METHOD FOR A VEHICLE AND ENERGY MANAGEMENT DEVICE
PROCÉDÉ DE GESTION D'ÉNERGIE POUR UN VÉHICULE ET DISPOSITIF DE GESTION D'ÉNERGIE

(30) Priorität: 14.03.2014 DE 102014204789
(43) Veröffentlichungstag der Anmeldung: 23.09.2015
(73) Patentinhaber: Volkswagen Aktiengesellschaft, 38440 Wolfsburg (DE)
(72) Erfinder: Kuhn, Mathias, 14129 Berlin (DE); Budzynski, Tobias, 13503 Berlin (DE); Lou, Jian, 10707 Berlin (DE); Petersen, Sönke, 12205 Berlin (DE); Hofmann, Gustav, 38116 Braunschweig (DE)

(56) Entgegenhaltungen:
- WO-A1-2013/100293
- DE-A1- 10 138 750
- DE-A1-102010 043 690
- US-A1- 2012 123 657
- US-A1- 2012 143 410
- US-A1- 2012 179 318
- US-A1- 2012 316 714

## Beschreibung

Die vorliegende Erfindung betrifft ein Energiemanagementverfahren für ein Fahrzeug, das einen Energiespeicher und mehrere Verbraucher umfasst. Ferner betrifft die Erfindung eine Energiemanagementvorrichtung für ein solches Fahrzeug. Die Energiemanagementvorrichtung umfasst eine Sensoreinrichtung zum Erfassen des Energievorrats im Energiespeicher des Fahrzeugs, eine mit der Sensoreinrichtung gekoppelte Rechenvorrichtung zum Berechnen einer prognostizierten Ist-Reichweite des Fahrzeugs und eine mit der Rechenvorrichtung gekoppelten Anzeigevorrichtung zum Erzeugen und Anzeigen eines graphischen Objekts, welches die prognostizierte Ist-Reichweite visualisiert.

Aus der DE 10 2010 038 539 A1 ist ein Verbrauchsanzeigesystem für ein Fahrzeug bekannt. Dieses System umfasst ein Display zum Darstellen von Verbrauchsinformationen und Mittel zum Erfassen des aktuellen Energieverbrauchs des Fahrzeugs. Eine Recheneinheit erzeugt Verbrauchsinformationen in Abhängigkeit von dem erfassten Energieverbrauch und zeigt diese Informationen auf dem Display an. Ferner ist mit der Recheneinheit ein Navigationssystem verbunden. Die Recheneinheit speichert ein durch das Navigationssystem erfasstes Start- und Zielpunkt-Paar sowie die jeweils gefahrene Strecke und mindestens einen zwischen Start- und Zielpunkt erfassten Verbrauchswert. Dieser Verbrauchswert wird bei Bedarf auf dem Display angezeigt.

Aus der DE 10 2010 001 011 A1 ist ein Kraftfahrzeug bekannt, bei welchem bei rein elektrischer Fahrt mindestens ein Nebenaggregat des Kraftfahrzeugs abhängig von einer fahrerseitigen Betätigung eines Bedienelements in seiner elektrischen Leistungsaufnahme reduziert oder komplett abgeschaltet werden kann, um so bei rein elektrischer Fahrt die elektrische Reichweite des Kraftfahrzeugs zu erhöhen. Das Fahrzeug kann ferner eine Überwachungseinrichtung für den Ladezustand eines elektrischen Energiespeichers aufweisen. Diese Überwachungseinrichtung kann auf Basis der elektrischen Leistungsaufnahme ein Nebenaggregat in seiner Leistungsaufnahme reduzieren oder es komplett abschalten. Die hierdurch erzielte Reichweitenerhöhung wird dem Fahrer angezeigt.

Aus der US 2012/316714 A1 ist ein Verfahren bekannt, bei welchem der Fahrer einzeln Funktionen abschalten kann, um die Reichweite zu erhöhen.

Der vorliegenden Erfindung liegt die Aufgabe zugrunde, ein Energiemanagementverfahren und eine Energiemanagementvorrichtung der eingangs genannten Art bereitzustellen, mit denen der Fahrer des Fahrzeugs auf einfache und intuitive Weise den Energieverbrauch des Fahrzeugs an seine Bedürfnisse anpassen kann, wodurch es ihm insbesondere ermöglicht wird, sicherzustellen, dass eine bestimmte Reichweite erzielt wird.

Diese Aufgabe wird durch ein Energiemanagementverfahren mit den Merkmalen des Anspruchs 1 und eine Energiemanagementvorrichtung mit den Merkmalen des Anspruchs 9 gelöst.

Vorteilhafte Ausgestaltungen und Weiterbildungen ergeben sich aus den abhängigen Ansprüchen.

Bei dem Energiemanagementverfahren wird der Energievorrat im Energiespeicher erfasst und eine prognostizierte Ist-Reichweite des Fahrzeugs berechnet. Daraufhin wird ein graphisches Objekt erzeugt und angezeigt, welches die prognostizierte Ist-Reichweite visualisiert. Bei dem Verfahren wird ferner eine Nutzereingabe erfasst, mit welcher eine Soll-Reichweite dadurch eingestellt wird, dass mittels einer Eingabeeinrichtung das graphische Objekt verändert wird. Nach der Einstellung der Soll-Reichweite wird aus der Differenz der Soll-Reichweite und der prognostizierten Ist-Reichweite berechnet, mittels welcher Zustandsänderungen zumindest einer Teilmenge der Verbraucher die Soll-Reichweite erzielbar ist. Die berechneten Zustandsänderungen werden als Vorschlag ausgegeben.

Bei dem erfindungsgemäßen Energiemanagementverfahren kann der Nutzer auf einfache und intuitive Weise durch Veränderung eines graphischen Objekts eine gewünschte Soll-Reichweite vorgeben. Dem Nutzer werden daraufhin die erforderlichen Zustandsänderungen einer Teilmenge der Verbraucher vorgeschlagen, die erforderlich sind, um die prognostizierte Reichweite des Fahrzeugs so zu verändern, dass die gewünschte Soll-Reichweite erzielt wird.

Gemäß einer bevorzugten Ausgestaltung des erfindungsgemäßen Energiemanagementverfahrens umfasst das graphische Objekt einen Schieberegler. Der Schieberegler wird insbesondere als Schaltelement auf einer Anzeigefläche angezeigt. Hierdurch wird erreicht, dass der Nutzer sehr einfach und intuitiv die Soll-Reichweite durch Betätigen des Schiebereglers einstellen kann.

Gemäß einer weiteren Ausgestaltung des erfindungsgemäßen Energiemanagementverfahrens hängt die Längserstreckung des graphischen Objekts von der prognostizierten Ist-Reichweite ab. Mit der Nutzereingabe wird die Soll-Reichweite dadurch eingestellt, dass mittels der Eingabeeinrichtung die Längserstreckung des graphischen Objekts verändert wird. Auf diese Weise wird erreicht, dass der Nutzer die Soll-Reichweite einfach und schnell einstellen kann.

Gemäß einer Ausgestaltung des erfindungsgemäßen Energiemanagementverfahrens wird ein Ziel erfasst. Ferner wird die Entfernung des Fahrzeugs von dem Ziel in einem Straßennetz bestimmt. Anschließend wird die Entfernung von dem Ziel von einem weiteren graphischen Objekt in Relation zu der prognostizierten Ist-Reichweite angezeigt. Insbesondere wenn die prognostizierte Ist-Reichweite geringer als die Entfernung zu dem Ziel ist, kann der Nutzer sehr einfach zum einen erkennen, dass der Energievorrat im Energiespeicher nicht ausreicht, um das Ziel zu erreichen. Zum anderen kann der Nutzer abschätzen, wie groß die Differenz zwischen der prognostizierten Ist-Reichweite und der Entfernung zu dem Ziel ist. Auf diese Weise kann er einschätzen, ob es erforderlich ist, den Energievorrat des Energiespeichers vor Erreichen des Ziels aufzufüllen, oder ob durch eine Verbrauchsreduktion der weiteren Verbraucher, die nicht dem Antrieb des Fahrzeugs dienen, die Reichweite des Fahrzeugs erhöht werden kann, um das Ziel zu erreichen. Das Straßennetz kann dabei auf an sich bekannte Weise in einer digitalen Karte gespeichert sein.

Wenn eine Nutzereingabe erfasst worden ist, mit welcher der Vorschlag für die Zustandsänderungen zumindest der Teilmenge der Verbraucher angenommen wird, werden Steuersignale zum Ändern der Zustände der Teilmenge der Verbraucher entsprechend dem Vorschlag erzeugt. Der Fahrer kann somit den Vorschlag durch einen sehr schnellen und einfachen Bedienvorgang annehmen, um die Zustände einer Vielzahl von Verbrauchern zu verändern, um die Soll-Reichweite zu erhöhen. Hierdurch wird erreicht, dass der Fahrer des Fahrzeugs so wenig wie möglich vom Führen des Fahrzeugs abgelenkt wird. Auf diese Weise leistet das erfindungsgemäße Energiemanagementverfahren einen Beitrag zur Sicherheit beim Führen des Fahrzeugs.

Nachdem die Zustände der Verbraucher verändert worden sind, wird die prognostizierte Ist-Reichweite des Fahrzeugs erneut berechnet und angezeigt, so dass die Reichweitenanzeige an die Veränderung der Zustände der Verbraucher angepasst wird.

Gemäß einer weiteren Ausgestaltung des erfindungsgemäßen Energiemanagementverfahrens wird ein Schaltelement zum Modifizieren des Vorschlags angezeigt. Wenn dieses Schaltelement betätigt worden ist, wird für die einzelnen Verbraucher des Vorschlags ausgegeben, wie sich die prognostizierte Ist-Reichweite des Fahrzeugs bei einer Zustandsänderung des jeweiligen Verbrauchers verändert. Der Nutzer kann somit nicht nur den Vorschlag durch eine einfache Betätigung annehmen, vielmehr kann er sich auch weitere Informationen zu dem Vorschlag anzeigen lassen.

Gemäß einer anderen Ausgestaltung des erfindungsgemäßen Energiemanagementverfahrens wird in dem Vorschlag selbst für einzelne Verbraucher ausgegeben, wie sich die prognostizierte Ist-Reichweite des Fahrzeugs bei einer Zustandsänderung des jeweiligen Verbrauchers verändert. In diesem Fall kann der Nutzer direkt die Details des Vorschlags für die Zustandsänderungen der Verbraucher erkennen.

Wenn die vorgeschlagenen Zustandsänderungen der einzelnen Verbraucher des Vorschlags angezeigt werden, sind mittels der Eingabeeinrichtung die Zustände der Teilmenge der Verbraucher des Vorschlags einzeln veränderbar. Wenn eine Nutzereingabe zum Verändern des Zustands eines Verbrauchs erfasst worden ist, wird eine aktualisierte prognostizierte Ist-Reichweite des Fahrzeugs berechnet und die Anzeige des graphischen Objekts wird unter Berücksichtigung der aktualisierten prognostizierten Ist-Reichweite verändert. Der Nutzer kann somit erkennen, wie sich eine Zustandsänderung eines einzelnen Verbrauchers auf die Ist-Reichweite auswirkt. In diesem Fall wird der Zustand des Verbrauchers gegebenenfalls noch nicht endgültig verändert. Dies kann erst durch eine weitere Nutzereingabe geschehen. Andererseits ist es auch möglich, dass bereits die erste Nutzereingabe den Zustand des Verbrauchers verändert und gleichzeitig die Veränderung der prognostizierten Ist-Reichweite visualisiert wird. In diesem Fall sind mittels der Eingabeeinrichtung die Zustände der Teilmenge der Verbraucher des Vorschlags einzeln veränderbar und ein Steuersignal zum Ändern des Zustands eines Verbrauchers wird erzeugt, wenn eine Nutzereingabe zum Ändern des Zustands des Verbrauchers erfasst worden ist.

Bei dem Verbraucher handelt es sich insbesondere um thermische Verbraucher zum Heizen und/oder Kühlen der Fahrgastzelle des Fahrzeugs. Diese thermischen Verbraucher sind beispielsweise die Klimatisierungseinrichtung des Fahrzeugs und die Sitzheizungen. Die Verbraucher können ferner zumindest eine Verbrauchergruppe umfassen, die mehrere Einzelverbraucher zusammenfasst. Beispielsweise kann eine Verbrauchergruppe das Fahrprofil des Fahrzeugs betreffen, welches verschiedene Verbraucher für die Motorsteuerung umfassen kann.

Die erfindungsgemäße Energiemanagementvorrichtung ist dadurch gekennzeichnet, dass sie eine Eingabeeinrichtung zum Erfassen einer Nutzereingabe umfasst, mit welcher eine Soll-Reichweite durch Veränderung des graphischen Objekts einstellbar ist. Ferner ist mittels der Rechenvorrichtung nach der Einstellung der Soll-Reichweite aus der Differenz der Soll-Reichweite und der prognostizierten Ist-Reichweite berechenbar, mittels welcher Zustandsänderungen zumindest einer Teilmenge der Verbraucher die Soll-Reichweite erzielbar ist. Die berechneten Zustandsänderungen sind dann als Vorschlag mittels der Anzeigevorrichtung ausgebbar.

Die erfindungsgemäße Energiemanagementvorrichtung ist insbesondere ausgebildet, das erfindungsgemäße Energiemanagementverfahren auszuführen. Sie weist somit auch dieselben Vorteile wie das Energiemanagementverfahren auf.

Die erfindungsgemäße Energiemanagementvorrichtung weist insbesondere eine mit der Rechenvorrichtung gekoppelte Steuervorrichtung auf. Mit dieser Steuervorrichtung sind Steuersignale zum Ändern der Zustände der Verbraucher erzeugbar, und zwar in Abhängigkeit von einer Nutzereingabe, mit welcher der Vorschlag angenommen wurde. Alternativ oder zusätzlich sind mit der Steuervorrichtung Steuersignale zum Ändern des Zustands eines Verbrauchers erzeugbar, wenn eine Nutzereingabe zum Ändern des Zustand dieses Verbrauchers erfasst worden ist.

Des Weiteren betrifft die Erfindung ein Fahrzeug mit einem Energiespeicher, mehreren Verbrauchern und einer Energiemanagementvorrichtung, wie sie vorstehend beschrieben wurde. Bei dem Fahrzeug handelt es sich insbesondere um ein Fahrzeug mit einem elektrischen Antrieb oder einem sogenannten Hybridantrieb.

Die Erfindung wird nun anhand von Ausführungsbeispielen mit Bezug zu den Zeichnungen erläutert.
- Figur 1: zeigt schematisch den Aufbau eines Ausführungsbeispiels der erfindungsgemäßen Energiemanagementvorrichtung und
- die Figuren 2 bis 7: zeigen Anzeigen auf der Anzeigevorrichtung, die von Ausführungsbeispielen des erfindungsgemäßen Energiemanagementverfahrens erzeugt werden.

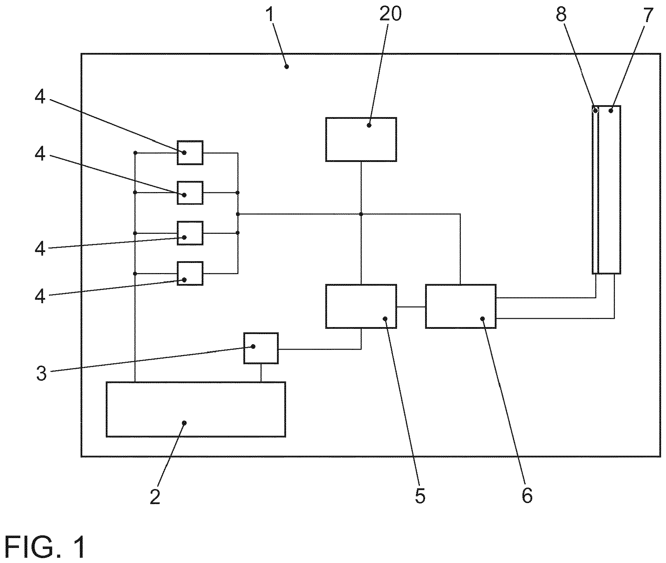

Mit Bezug zu Figur 1 wird zunächst der grundsätzliche Aufbau der erfindungsgemäßen Energiemanagementvorrichtung erläutert:
In einem Fahrzeug 1 ist ein Energiespeicher 2 vorgesehen. Bei diesem Energiespeicher handelt es sich im vorliegenden Ausführungsbeispiel um eine wiederaufladbare Batterie.

Gleichermaßen könnte es sich jedoch auch um einen Kraftstoff oder eine Kombination aus einem Kraftstoff und einer Batterie als Energiequelle handeln. Mittels einer Sensoreinrichtung 3 kann der Energievorrat des Energiespeichers 2 erfasst werden. Die Sensoreinrichtung 3 erfasst somit beispielsweise den Ladestand einer Batterie oder die in einem Tank befindliche Kraftstoffmenge.

Mittels des Energiespeichers 2 wird der Antrieb zur Fortbewegung des Fahrzeugs 1 gespeist. Beispielsweise bezieht ein elektrischer Antrieb für die Fortbewegung des Fahrzeugs seine Energie aus dieser Batterie. Die Reichweite des Fahrzeugs hängt somit von der in dem Energiespeicher 2 gespeicherten Energiemenge ab.

Des Weiteren umfasst das Fahrzeug 1 eine Vielzahl von Verbrauchern 4, welche nicht dem Antrieb des Fahrzeugs 1 dienen. Die Verbraucher 4 umfassen beispielsweise thermische Verbraucher wie eine Klimatisierungseinrichtung oder eine Sitzheizung sowie vielfältige Steuergeräte des Fahrzeugs 1 sowie Infotainmenteinrichtungen. Die Verbraucher 4 werden auch von dem Energiespeicher 2 mit Energie versorgt.

Des Weiteren umfasst die Energiemanagementvorrichtung eine Rechenvorrichtung 5, welche mit der Sensoreinrichtung 3 gekoppelt ist, so dass Daten zum erfassten Energievorrat des Energiespeichers 2 von der Sensoreinrichtung 3 an die Rechenvorrichtung 5 übertragen werden können. Die Rechenvorrichtung 5 ist ferner mit den Verbrauchern 4 gekoppelt, so dass sie den Zustand und den Energieverbrauch der Verbraucher 4 erfassen kann. Aus dem derzeitigen Energieverbrauch berechnet die Rechenvorrichtung 5 eine prognostizierte Ist-Reichweite des Fahrzeugs 1. In einer Weiterbildung kann die Rechenvorrichtung 5 ferner mit einem Navigationssystem 20 des Fahrzeugs 1 gekoppelt sein. Von dem Navigationssystem 20 des Fahrzeugs können der Rechenvorrichtung 5 Daten zu einer Route des Fahrzeugs 1 und zugehöriger Streckenprofile übertragen werden. Auf Basis dieser Daten kann die Rechenvorrichtung 5 die prognostizierte Ist-Reichweite des Fahrzeugs 1 noch genauer bestimmen. Beispielsweise kann die Rechenvorrichtung 5 in diesem Fall berücksichtigen, ob Streckenabschnitte befahren werden, bei welchen der Energieverbrauch relativ hoch oder relativ niedrig ist.

Die Energiemanagementvorrichtung des Fahrzeugs 1 umfasst ferner eine Steuervorrichtung 6. Die Steuervorrichtung 6 ist mit der Rechenvorrichtung 5 und dem Navigationssystem 20 sowie ferner mit einer Anzeigevorrichtung 7 und einer Eingabeeinrichtung 8 gekoppelt. Des Weiteren ist die Steuervorrichtung 6 mit den Verbrauchern 4 gekoppelt, um Steuersignale an diese zu übertragen. Mittels der Steuersignale kann der Zustand der Verbraucher 4 verändert werden, wie dies später erläutert wird.

Bei der Eingabeeinrichtung 8 handelt es sich um eine berührungsempfindliche Oberfläche auf einer Anzeigefläche der Anzeigevorrichtung 7. Es wird somit ein sogenannter Touchscreen bereitgestellt. Mittels der Eingabeeinrichtung 8 kann der Nutzer unter anderm eine Soll-Reichweite für das Fahrzeug 1 einstellen oder Zustandsänderungen der Verbraucher 4 initiieren, wie es später erläutert wird.

Weitere Details der erfindungsgemäßen Energiemanagementvorrichtung werden im Folgenden mit Bezug zu der Beschreibung von Ausführungsbeispielen des erfindungsgemäßen Energiemanagementverfahrens erläutert:

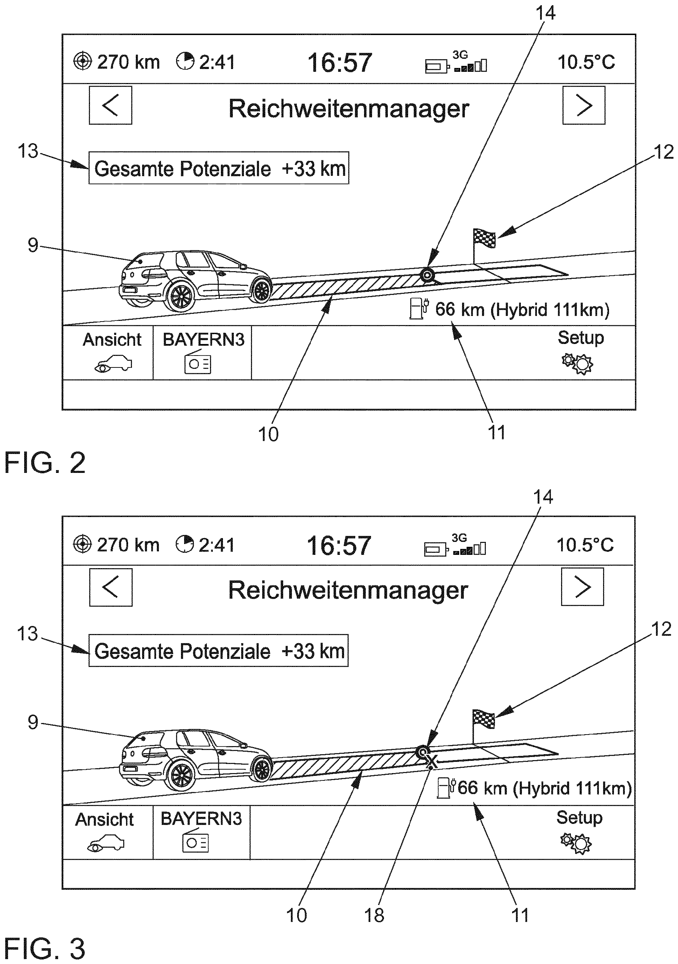

In Figur 2 ist eine Anzeige dargestellt, welche von dem Energiemanagementverfahren erzeugt und von der Anzeigevorrichtung 7 angezeigt wird. Es wird ein graphisches Objekt 9 angezeigt, welches das eigene Fahrzeug 1 repräsentiert. Ferner wird ein graphisches Objekt 10 erzeugt und angezeigt, welche die prognostizierte Ist-Reichweite visualisiert. Das graphische Objekt 10 umfasst einen perspektivisch dargestellten Balken, welcher bei dem graphischen Objekt 9 des Fahrzeugs 1 beginnt und sich von diesem auf einer virtuellen Straße in Längsrichtung erstreckt. Das Ende des Balkens umfasst eine Markierung 14. Die Entfernung dieser Markierung 14 von dem graphischen Objekt 9 des Fahrzeugs 1, das heißt die Länge des Balkens des graphischen Objekts 10, visualisiert die von der Rechenvorrichtung 5 berechneten prognostizierte Ist-Reichweite des Fahrzeugs 1. Diese prognostizierte Ist-Reichweite wird außerdem alphanumerisch durch ein graphisches Objekt 11 angezeigt. In dem in Figur 2 gezeigten Beispiel umfasst das graphische Objekt 11 eine Angabe für einen reinen Batterieantrieb und eine Angabe für einen Hybridantrieb.

Des Weiteren wird ein graphisches Objekt 12 angezeigt, welches die Entfernung des Ziels des Navigationssystems 20 von der derzeitigen Position des Fahrzeugs 1 visualisiert. Das graphische Objekt 12 für dieses Ziel wird auch auf der virtuellen Straße in Fahrtrichtung des graphischen Objekts 9 wiedergegeben. Aus der geometrischen Relation des graphischen Objekts 9 für das Fahrzeug 1, der Markierung 14 des graphischen Objekts 10 und dem graphischen Objekt 12 für das Ziel des Navigationssystems 20 kann der Fahrer des Fahrzeugs 1 einfach und intuitiv erkennen, ob die prognostizierte Ist-Reichweite ausreicht, um das Ziel zu erreichen.

Schließlich wird ein graphisches Objekt 13 angezeigt, welches Steigerungspotentiale für die prognostizierte Ist-Reichweite wiedergibt. Dieses Potential ergibt sich aus der Energieeinsparung durch das Abschalten von Verbrauchern 4, welche nicht unbedingt für den Antrieb des Fahrzeugs 1 benötigt werden. Das Potential wird von der Rechenvorrichtung 5 berechnet und über die Steuervorrichtung 6 an die Anzeigevorrichtung 7 übertragen.

Bei dem in Figur 2 gezeigten Beispiel erkennt der Fahrer, dass die prognostizierte Ist-Reichweite des Fahrzeugs 1 nicht ausreicht, um das Ziel des Navigationssystems 20 zu erreichen. In einem solchen Fall kann der Fahrer oder ein anderer Nutzer sehr einfach und intuitiv eine Soll-Reichweite einstellen. Hierfür ist es nur erforderlich das graphische Objekt 10 für die prognostizierte Ist-Reichweite zu verändern.

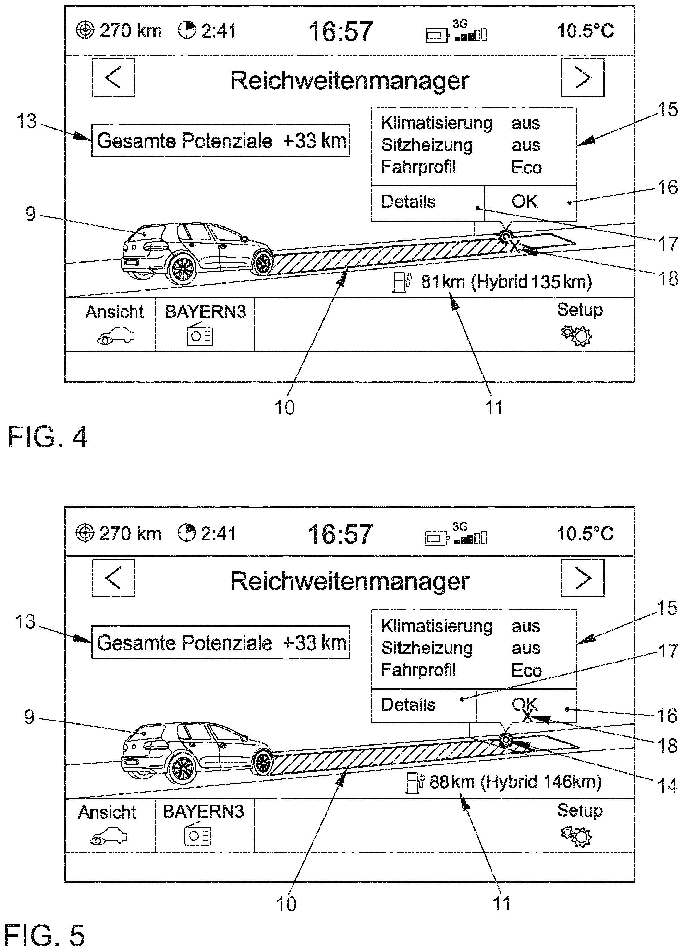

Wie in Figur 3 gezeigt, berührt der Nutzer hierfür die berührungsempfindliche Oberfläche der Eingabeeinrichtung 8 bei der Position 18 bei der Markierung 14 des graphischen Objekts 10. Nun bewegt er diese Position 18 auf der virtuell dargestellten Straße in Fahrtrichtung des graphischen Objekts 9 von dem graphischen Objekt 9 weg, wie es in Figur 4 gezeigt ist. Bei der in Figur 4 gezeigten Position 18 lässt der Nutzer wieder die berührungsempfindliche Oberfläche los. Das graphische Objekt 10 umfasst somit einen Schieberegler, da die Markierung 14 vom Nutzer zur Einstellung der Soll-Reichweite verschoben werden kann.

Der Nutzer hat in diesem Fall die Soll-Reichweite so groß eingestellt, dass das Ziel, welches durch das graphische Objekt 12 symbolisiert wird, erreicht werden kann. Diese Nutzereingabe wurde von der Steuervorrichtung 6 erfasst, welches daraufhin das graphische Objekt 10 wie in Figur 4 gezeigt verändert. Des Weiteren berechnet die Rechenvorrichtung 5 nach der Einstellung der Soll-Reichweite aus der Differenz der Soll-Reichweite und der prognostizierten Ist-Reichweite, mittels welcher Zustandsänderungen zumindest einer Teilmenge der Verbraucher 4 die Soll-Reichweite erzielbar ist. Auf Basis dieser Berechnung wird ein weiteres graphisches Objekt 15 erzeugt und von der Anzeigevorrichtung 7 angezeigt, welches einen Vorschlag für die berechneten Zustandsänderungen ausgibt. In dem in Figur 4 gezeigten Fall wird vorgeschlagen, die Klimatisierung und die Sitzheizung auszuschalten sowie das Fahrprofil auf den Zustand "ECO" zu ändern.

Des Weiteren umfasst das graphische Objekt 15 Schaltelemente 16 und 17. Wenn der Nutzer das Schaltelement 16 durch eine Berührung der berührungsempfindlichen Oberfläche 8 bei der entsprechenden Position betätigt, nimmt er den Vorschlag an. Dies ist in Figur 5 gezeigt. In diesem Fall erzeugt die Steuervorrichtung 6 Steuersignale für entsprechende Zustandsänderungen der Verbraucher 4. Der von der Rechenvorrichtung 5 berechnete Vorschlag für Zustandsänderungen der Verbraucher 4 kann auch eine Zustandsänderung für eine Verbrauchergruppe umfassen, die aus mehreren Einzelverbrauchern besteht. Beispielsweise fasst das Fahrprofil die Einstellungen mehrerer Verbraucher 4 zusammen.

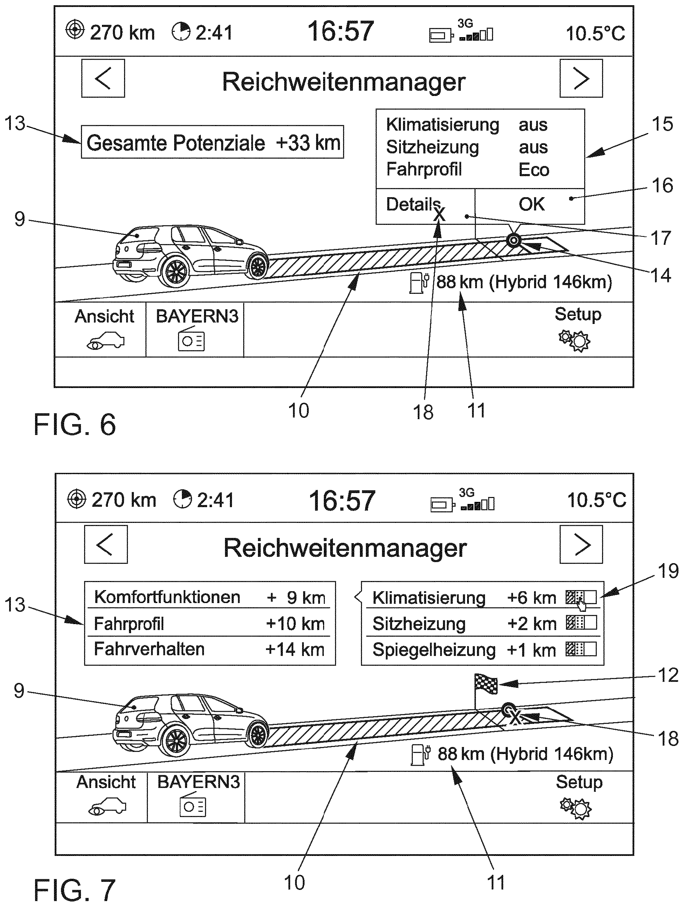

Wenn der Nutzer die Schaltfläche 17 wie in Figur 6 gezeigt betätigt, werden Details zu dem Vorschlag angezeigt. Es wird insbesondere für einzelne Verbraucher 4 ausgegeben, wie sich die prognostizierte Ist-Reichweite des Fahrzeugs 1 bei einer Zustandsänderung des jeweiligen Verbrauchers 4 verändert. Dies ist in Figur 7 wiedergegeben.

Es wird ein graphisches Objekt 19 angezeigt, welches die einzelnen Verbraucher 4 des Vorschlags aufführt. Ferner wird die Reichweitenveränderung bei einer Zustandsänderung des entsprechenden Verbrauchers 4 angezeigt. Der Nutzer kann die Zustände der einzelnen Verbraucher 4 nun mittels der Eingabeeinrichtung 8 direkt verändern. Jede Zustandsänderung wird mittels der Steuervorrichtung 6 in ein entsprechendes Steuersignal für den Verbraucher 4 umgesetzt. Ferner berechnet die Rechenvorrichtung 5 eine aktualisierte prognostizierte Ist-Reichweite des Fahrzeugs 1, welche wiederum mittels der Anzeigevorrichtung 7 durch eine Veränderung des graphischen Objekts 10 visualisiert wird. Es wäre auch möglich, zunächst dem Nutzer nur die Veränderung der prognostizierten Ist-Reichweite des Fahrzeugs 1 bei der Betätigung des Schaltelements für die Zustandsänderung anzuzeigen und erst nach einer weiteren Bestätigung die Zustandsänderung dann auch mittels eines Steuersignals für den Verbraucher 4 umzusetzen.

Bei einem weiteren Ausführungsbeispiel wird ausgehend von der Anzeige in Figur 3 bei einem Verschieben der Markierung 14 nicht das graphische Objekt 15 angezeigt, sondern unmittelbar das graphische Objekt 19 mit dem Vorschlag und den zugehörigen Details. Der Nutzer kann in diesem Fall den Vorschlag annehmen oder manuell die Zustände einzelner Verbraucher ändern. Auch in diesem Fall kann während der Betätigung der Schaltflächen für die Änderung der Zustände der Verbraucher 4 das Energiemanagementverfahren unmittelbar die Auswirkungen auf die prognostizierte Ist-Reichweite anzeigen, indem die Markierung 14 des graphischen Objekts 10 entsprechend verschoben wird.

### Bezugszeichenliste

- 1: Fahrzeug
- 2: Energiespeicher
- 3: Sensoreinrichtung
- 4: Verbraucher
- 5: Rechenvorrichtung
- 6: Steuervorrichtung
- 7: Anzeigevorrichtung
- 8: Eingabeeinrichtung
- 9: graphisches Objekt
- 10: graphisches Objekt
- 11: graphisches Objekt
- 12: graphisches Objekt
- 13: graphisches Objekt
- 14: Markierung
- 15: graphisches Objekt
- 16: Schaltelement
- 17: Schaltelement
- 18: Position
- 19: graphisches Objekt
- 20: Navigationssystem

## Patentansprüche

1. Energiemanagementverfahren für ein Fahrzeug (1), das einen Energiespeicher (2) und mehrere Verbraucher (4) umfasst, bei dem
der Energievorrat im Energiespeicher (2) erfasst und eine prognostizierte Ist-Reichweite des Fahrzeugs (1) berechnet wird,
ein graphisches Objekt (10) erzeugt und angezeigt wird, welches die prognostizierte Ist-Reichweite visualisiert,
eine Nutzereingabe erfasst wird, mit welcher eine Soll-Reichweite dadurch eingestellt wird, dass mittels einer Eingabeeinrichtung (8) das graphische Objekt (10) verändert wird,
nach der Einstellung der Soll-Reichweite aus der Differenz der Soll-Reichweite und der prognostizierten Ist-Reichweite berechnet wird, mittels welcher Zustandsänderungen zumindest einer Teilmenge der Verbraucher (4) die Soll-Reichweite erzielbar ist, und
die berechneten Zustandsänderungen als Vorschlag ausgegeben werden, wobei mittels einer Eingabeeinrichtung (8) die Zustände der Teilmenge der Verbraucher (4) des Vorschlags einzeln veränderbar sind,
wenn eine Nutzereingabe zum Verändern des Zustands eines Verbrauchers (4) erfasst worden ist, eine aktualisierte prognostizierte Ist-Reichweite des Fahrzeugs (1) berechnet wird und die Anzeige des graphischen Objekts (10) unter Berücksichtigung der aktualisierten prognostizierten Ist-Reichweite verändert wird, wobei der Zustand des Verbrauchers erst durch eine weitere Nutzereingabe verändert wird.

2. Energiemanagementverfahren nach Anspruch 1,
**dadurch gekennzeichnet, dass**
das graphische Objekt (10) einen Schieberegler umfasst.

3. Energiemanagementverfahren nach Anspruch 1 oder 2,
**dadurch gekennzeichnet, dass**
die Längserstreckung des graphischen Objekts (10) von der prognostizierten Ist-Reichweite abhängt und mit der Nutzereingabe die Soll-Reichweite dadurch eingestellt wird, dass mittels der Eingabeeinrichtung (8) die Längserstreckung des graphischen Objekts (10) verändert wird.

4. Energiemanagementverfahren nach einem der vorhergehenden Ansprüche,
**dadurch gekennzeichnet, dass**
ein Ziel erfasst, die Entfernung des Fahrzeugs (1) von dem Ziel in einem Straßennetz bestimmt und die Entfernung von dem Ziel von einem weiteren graphischen Objekt (12) in Relation zu der prognostizierten Ist-Reichweite angezeigt wird.

5. Energiemanagementverfahren nach einem der vorhergehenden Ansprüche,
**dadurch gekennzeichnet, dass**
Steuersignale zum Ändern der Zustände der Teilmenge der Verbraucher (4) entsprechend dem Vorschlag erzeugt werden, wenn eine Nutzereingabe erfasst worden ist, mit welcher der Vorschlag angenommen wird.

6. Energiemanagementverfahren nach einem der vorhergehenden Ansprüche,
**dadurch gekennzeichnet, dass**
ein Schaltelement (17) zum Modifizieren des Vorschlags angezeigt wird, und dass, wenn dieses Schaltelement (17) betätigt worden ist, für die einzelnen Verbraucher (4) des Vorschlags angegeben wird, wie sich die prognostizierte Ist-Reichweite des Fahrzeugs (1) bei einer Zustandsänderung des jeweiligen Verbrauchers (4) verändert.

7. Energiemanagementverfahren nach einem der Ansprüche 1 bis 5,
**dadurch gekennzeichnet, dass**
in dem Vorschlag für einzelne Verbraucher (4) ausgegeben wird, wie sich die prognostizierte Ist-Reichweite des Fahrzeugs (1) bei einer Zustandsänderung des jeweiligen Verbrauchers (4) verändert.

8. Energiemanagementverfahren nach einem der vorhergehenden Ansprüche,
**dadurch gekennzeichnet, dass**
mittels der Eingabeeinrichtung (8) die Zustände der Teilmenge der Verbraucher (4) des Vorschlags einzeln veränderbar sind und dass ein Steuersignal zum Ändern des Zustands eines Verbrauchers (4) erzeugt wird, wenn eine Nutzereingabe zum Ändern des Zustands dieses Verbrauchers (4) erfasst worden ist.

9. Energiemanagementvorrichtung für ein Fahrzeug (1), das einen Energiespeicher (2) und mehrere Verbraucher (4) umfasst, wobei die Energiemanagementvorrichtung umfasst:
eine Sensoreinrichtung (3) zum Erfassen des Energievorrats im Energiespeicher (2) des Fahrzeugs (1),
eine mit der Sensoreinrichtung (3) gekoppelte Rechenvorrichtung (5) zum Berechnen der prognostizierten Ist-Reichweite des Fahrzeugs (1) und
eine mit der Rechenvorrichtung (5) gekoppelt Anzeigevorrichtung (7) zum Erzeugen und Anzeigen eines graphischen Objekts (10), welches die prognostizierte Ist-Reichweite visualisiert,
eine Eingabeeinrichtung (8) zum Erfassen einer Nutzereingabe umfasst, mit welcher eine Soll-Reichweite durch Veränderung des graphischen Objekts (10) einstellbar ist,
wobei mittels der Rechenvorrichtung (5) nach der Einstellung der Soll-Reichweite aus der Differenz der Soll-Reichweite und der prognostizierten Ist-Reichweite berechenbar ist, mittels welcher Zustandsänderungen zumindest einer Teilmenge der Verbraucher (4) die Soll-Reichweite erzielbar ist, und
die berechneten Zustandsänderungen als Vorschlag mittels der Anzeigevorrichtung (7) ausgebbar sind, und
wobei mittels einer Eingabeeinrichtung (8) die Zustände der Teilmenge der Verbraucher (4) des Vorschlags einzeln veränderbar sind und,
wenn eine Nutzereingabe zum Verändern des Zustands eines Verbrauchers (4) erfasst worden ist, eine aktualisierte prognostizierte Ist-Reichweite des Fahrzeugs (1) berechenbar ist und die Anzeige des graphischen Objekts (10) unter Berücksichtigung der aktualisierten prognostizierten Ist-Reichweite veränderbar ist, wobei der Zustand des Verbrauchers erst durch eine weitere Nutzereingabe verändert wird.

10. Energiemanagementvorrichtung nach Anspruch 9,
**dadurch gekennzeichnet, dass**
die Verbraucher (4) thermische Verbraucher zum Heizen und/oder Kühlen einer Fahrgastzelle des Fahrzeugs (1) umfassen.

11. Energiemanagementvorrichtung nach Anspruch 9 oder 10,
**dadurch gekennzeichnet, dass**
die Verbraucher (4) zumindest eine Verbrauchergruppe umfassen, die mehrere Einzelverbraucher zusammenfasst.

12. Energiemanagementvorrichtung nach einem der Ansprüche 9 bis 11,
**dadurch gekennzeichnet, dass**
die Energiemanagementvorrichtung eine mit der Rechenvorrichtung (5) gekoppelte Steuervorrichtung (6) aufweist, mit der Steuersignale zum Ändern der Zustände der Verbraucher (4) in Abhängigkeit von einer Nutzereingabe, mit welcher der Vorschlag angenommen wurde, und/oder zum Ändern des Zustands eines Verbrauchers (4), wenn eine Nutzereingabe zum Ändern des Zustands dieses Verbrauchers (4) erfasst worden ist, erzeugbar sind.

13. Fahrzeug (1) mit einem Energiespeicher (2), mehreren Verbrauchern (4) und einer Energiemanagementvorrichtung nach einem der Ansprüche 9 bis 12.

## Claims

1. Energy management method for a vehicle (1) which comprises an energy store (2) and a plurality of consumers (4), in which
the energy reserve in the energy store (2) is detected and a predicted actual range of the vehicle (1) is calculated,
a graphic object (10) which visualizes the predicted actual range is generated and displayed,
a user input is detected, with which a setpoint range is set in that the graphic object (10) is changed by means of an input apparatus (8),
after the setting of the setpoint range, on the basis of the difference between the setpoint range and the predicted actual range it is calculated by means of which changes in state of at least one subset of the consumers (4) the setpoint range is able to be achieved, and
the calculated changes in state are output as a proposal, wherein the states of the subset of the consumers (4) of the proposal are able to be changed individually by means of an input apparatus (8),
if a user input for changing the state of a consumer (4) has been detected, an updated predicted actual range of the vehicle (1) is calculated and the display of the graphic object (10) is changed taking into account the updated predicted actual range, wherein the state of the consumer is changed only by means of a further user input.

2. Energy management method according to Claim 1, **characterized in that**
the graphic object (10) comprises a sliding controller.

3. Energy management method according to Claim 1 or 2, **characterized in that**
the longitudinal extent of the graphic object (10) depends on the predicted actual range, and with the user input the setpoint range is set by changing the longitudinal extent of the graphic object (10) by means of the input apparatus (8).

4. Energy management method according to one of the preceding claims,
**characterized in that**
a destination is detected, the distance of the vehicle (1) from the destination in a road network is determined, and the distance of the destination from a further graphic object (12) in relation to the predicted actual range is displayed.

5. Energy management method according to one of the preceding claims,
**characterized in that**
control signals for changing the states of the subset of the consumers (4) are generated in accordance with the proposal if a user input with which the proposal is accepted has been detected.

6. Energy management method according to one of the preceding claims,
**characterized in that**
a switching element (17) for modifying the proposal is displayed, and **in that** if this switching element (17) has been activated, it is specified, for the individual consumers (4) of the proposal, how the predicted actual range of the vehicle (1) changes in the event of a change in state of the respective consumer (4).

7. Energy management method according to one of Claims 1 to 5,
**characterized in that**
in the proposal for individual consumers (4) it is output how the predicted actual range of the vehicle (1) changes in the event of a change in state of the respective consumer (4).

8. Energy management method according to one of the preceding claims,
**characterized in that**
the states of the subset of the consumers (4) of the proposal are able to be changed individually by means of the input apparatus (8), and **in that** a control signal for changing the state of a consumer (4) is generated if a user input for changing the state of this consumer (4) has been detected.

9. Energy management device for a vehicle (1) which comprises an energy store (2) and a plurality of consumers (4), wherein the energy management device comprises:
a sensor apparatus (3) for detecting the energy reserve in the energy store (2) of the vehicle (1),
a computing device (5), coupled to the sensor apparatus (3), for calculating the predicted actual range of the vehicle (1), and
a display device (7), coupled to the computing device (5), for generating and displaying a graphic object (10) which visualizes the predicted actual range,
an input apparatus (8) for detecting a user input, with which a setpoint range is able to be set by changing the graphic object (10),
wherein, after the setting of the setpoint range, by means of the computing device (5), it is able to be calculated, on the basis of the difference between the setpoint range and the predicted actual range, by means of which changes in state of at least one subset of the consumers (4) the setpoint range is able to be achieved, and
the calculated changes in state are able to be output as a proposal by means of the display device (7), and
wherein the states of the subset of the consumers (4) of the proposal are able to be changed individually by means of an input apparatus (8), and
if a user input for changing the state of a consumer (4) has been detected, an updated predicted actual range of the vehicle (1) is able to be calculated and the display of the graphic object (10) is able to be changed taking into account the updated predicted actual range, wherein the state of the consumer is changed only by means of a further user input.

10. Energy management device according to Claim 9,
**characterized in that**
the consumers (4) comprise thermal consumers for heating and/or cooling a passenger compartment of the vehicle (1) .

11. Energy management device according to Claim 9 or 10, **characterized in that**
the consumers (4) comprise at least one consumer group which combines a plurality of individual consumers.

12. Energy management device according to one of Claims 9 to 11,
**characterized in that**
the energy management device has a control device (6) which is coupled to the computing device (5) and with which control signals for changing the states of the consumers (4) are able to be generated as a function of a user input with which the proposal has been accepted, and/or for changing the state of a consumer (4) if a user input for changing the state of this consumer (4) has been detected.

13. Vehicle (1) having an energy store (2), a plurality of consumers (4) and an energy management device according to one of Claims 9 to 12.

## Revendications

1. Procédé de gestion d'énergie destiné à un véhicule (1) qui comprend un accumulateur d'énergie (2) et une pluralité de consommateurs (4), procédé dans lequel
la réserve d'énergie dans l'accumulateur d'énergie (2) est détectée et une autonomie réelle prédite du véhicule (1) est calculée,
un objet graphique (10) est généré et affiché qui visualise l'autonomie réelle prédite,
une entrée d'utilisateur est détectée qui permet de régler une autonomie cible en changeant l'objet graphique (10) à l'aide d'un module d'entrée (8),
après avoir réglé l'autonomie cible, un calcul est effectué à partir de la différence entre l'autonomie cible et l'autonomie réelle prédite pour déterminer quelles variations d'état d'au moins un sous-ensemble de consommateurs (4) permettent d'atteindre l'autonomie cible, et
les variations d'état calculées sont délivrées sous forme d'une proposition, les états du sous-ensemble de consommateurs (4) de la proposition pouvant être modifiés individuellement au moyen d'un module d'entrée (8),
lorsqu'une entrée d'utilisateur destinée à modifier l'état d'un consommateur (4) a été détectée, une autonomie réelle prédite actualisée du véhicule (1) est calculée et l'affichage de l'objet graphique (10) est modifié avec prise en compte de l'autonomie réelle prédite actualisée, l'état du consommateur n'étant modifié que par une autre entrée d'utilisateur.

2. Procédé de gestion d'énergie selon la revendication 1,
**caractérisé en ce que**
l'objet graphique (10) comprend un curseur.

3. Procédé de gestion d'énergie selon la revendication 1 ou 2,
**caractérisé en ce que**
la longueur de l'objet graphique (10) dépend de l'autonomie réelle prédite et l'autonomie cible est réglée avec l'entrée d'utilisateur par modification de la longueur de l'objet graphique (10) à l'aide du module d'entrée (8).

4. Procédé de gestion d'énergie selon l'une des revendications précédentes,
**caractérisé en ce que**
une cible est détectée, la distance du véhicule (1) à la cible dans un réseau routier est déterminée et la distance à la cible est affichée par un autre objet graphique (12) en relation avec l'autonomie réelle prédite.

5. Procédé de gestion d'énergie selon l'une des revendications précédentes,
**caractérisé en ce que**
des signaux de commande destinés à changer les états du sous-ensemble de consommateurs (4) sont générés selon la proposition lorsqu'une entrée d'utilisateur avec laquelle la proposition est acceptée a été détectée.

6. Procédé de gestion d'énergie selon l'une des revendications précédentes,
**caractérisé en ce que**
un élément de commutation (17) destiné à modifier la proposition est affiché et
lorsque cet élément de commutation (17) a été actionné, il est indiqué pour les différents consommateurs (4) de la proposition comment l'autonomie réelle prévue du véhicule (1) est modifiée lors d'une modification d'état du consommateur respectif (4).

7. Procédé de gestion d'énergie selon l'une des revendications 1 à 5,
**caractérisé en ce que**
la manière dont l'autonomie réelle prévue du véhicule (1) est modifiée lors d'une modification de l'état du consommateur respectif (4) est délivrée dans la proposition destinée aux consommateurs individuels (4).

8. Procédé de gestion d'énergie selon l'une des revendications précédentes,
**caractérisé en ce que**
les états du sous-ensemble de consommateurs (4) de la proposition peuvent être modifiés individuellement à l'aide du module d'entrée (8) et
un signal de commande destiné à modifier l'état d'un consommateur (4) est généré si une entrée d'utilisateur destinée à modifier l'état de ce consommateur (4) a été détectée.

9. Dispositif de gestion d'énergie destiné à un véhicule (1) qui comprend un accumulateur d'énergie (2) et une pluralité de consommateurs (4), le dispositif de gestion d'énergie comprenant :
un module de détection (3) destiné à détecter la réserve d'énergie dans l'accumulateur d'énergie (2) du véhicule (1),
un module informatique (5) couplé au module de détection (3) et destiné à calculer l'autonomie réelle prédite du véhicule (1) et
un module d'affichage (7) couplé au dispositif informatique (5) et destiné à générer et afficher un objet graphique (10) qui visualise l'autonomie réelle prédite,
un module d'entrée (8) destiné à détecter une entrée d'utilisateur qui permet de régler une autonomie cible en modifiant l'objet graphique (10),
après le réglage de l'autonomie cible, le module informatique (5) pouvant calculer à partir de la différence entre l'autonomie cible et l'autonomie réelle prédite quelles variations d'état d'au moins un sous-ensemble de consommateurs (4) permettent d'atteindre l'autonomie cible, et
les variations d'état calculées étant délivrées sous forme d'une proposition au moyen du dispositif d'affichage (7), et
les états du sous-ensemble de consommateurs (4) de la proposition pouvant être modifiés individuellement à l'aide d'un module d'entrée (8) et,
lorsqu'une entrée d'utilisateur destinée à modifier l'état d'un consommateur (4) a été détectée, une autonomie réelle prédite actualisée du véhicule (1) pouvant être calculée et l'affichage de l'objet graphique (10) pouvant être modifié avec prise en compte de l'autonomie réelle prédite actualisée, l'état du consommateur n'étant modifié que par une autre entrée d'utilisateur.

10. Dispositif de gestion d'énergie selon la revendication 9,
**caractérisé en ce que**
les consommateurs (4) comprennent des consommateurs thermiques destinés à chauffer et/ou refroidir l'habitacle du véhicule (1).

11. Dispositif de gestion d'énergie selon la revendication 9 ou 10,
**caractérisé en ce que**
les consommateurs (4) comprennent au moins un groupe de consommateurs qui regroupe plusieurs consommateurs individuels

12. Dispositif de gestion d'énergie selon l'une des revendications 9 à 11,
**caractérisé en ce que**
le dispositif de gestion d'énergie comporte un dispositif de commande (6) couplé au dispositif informatique (5) et permettant de générer des signaux de commande destinés à modifier les états des consommateurs (4) en fonction d'une entrée d'utilisateur avec laquelle la proposition a été acceptée et/ou à modifier l'état d'un consommateur (4) lorsqu'une entrée d'utilisateur destinée à modifier l'état de ce consommateur (4) a été détectée.

13. Véhicule (1) comprenant un accumulateur d'énergie (2), une pluralité de consommateurs (4) et un dispositif de gestion d'énergie selon l'une des revendications 9 à 12.
